# EUROPÄISCHE PATENTANMELDUNG

(11) **EP 1 950 865 A2**
(43) Veröffentlichungstag der Anmeldung: **30.07.2008**
(21) Anmeldenummer: 08101054.8
(22) Anmeldetag: 29.01.2008
(51) Int. Cl.: H02K 3/12, H02K 15/00

(54) **Elektrische Maschine mit einem Ständer, sowie Verfahren zur Herstellung einer elektrischen Maschine mit einem Ständer**

(30) Priorität: 29.01.2007 DE 102007005172
(71) Anmelder: ROBERT BOSCH GMBH, 70442 Stuttgart (DE)
(72) Erfinder: Herbold, Klaus, 71679, Asperg (DE); Goldschmidt, Robert, 71679, Asperg (DE); Schwarzkopf, Christoph, 74399, Walheim (DE); Kreuzer, Helmut, 71701, Schwieberdingen (DE)

(57) **Zusammenfassung**

Elektrische Maschine mit einem Ständer (16),
- der einen Ständerkern (17) und eine Ständerwicklung (18) aus Wicklungsdraht aufweist,
o wobei der Ständerkern (17) Aufnahmen (93) für Wicklungsabschnitte, vorzugsweise Nuten, aufweist und
o in den Aufnahmen (93) Wicklungsabschnitte angeordnet sind, und der Ständerkern (17) axiale Enden aufweist,

- wobei die Ständerwicklung (18) außerhalb der Aufnahmen (93) jeweils Wickelköpfe (45) hat,
o die zumindest teilweise aus Wicklungsfortsätzen (96) der in den Aufnahmen (93) angeordneten Wicklungsabschnitte (99) bestehen und

- Wicklungsfortsätze (96) aus einer bestimmten Aufnahme (93), Wicklungsfortsätze (96) aus einer der genannten bestimmten Aufnahme (93) unmittelbar benachbarten Aufnahme (93) und ein Flächenabschnitt eines axialen Endes des Ständerkerns (17) zwischen sich eine Durchströmöffnung (105) begrenzen,
- wobei die Durchströmöffnung (105) zumindest eines Wickelkopfes (45) durch gezielt verformte Oberflächenabschnitte (108,111,114) der Wicklungsfortsätze (96) begrenzt ist.

## Beschreibung

### Stand der Technick

Offenbarung der Erfindung Bei Kompaktgeneratoren mit innenliegenden Radiallüftern kommen u. a. Ständer zum Einsatz, die mit der sogenannten Einziehtechnik hergestellt werden. Dazu werden Ständereisen vorbereitet, die in der Regel bereits eine runde Ringform aufweisen. Parallel dazu vorbereitete Wicklungen bzw. deren Phasen werden anschließend entweder einzeln oder alle drei Phasen zugleich in Nuten des Ständereisens eingezogen. Zwischen den Einziehvorgängen der einzelnen Spulen werden die Wickelköpfe geformt, um definierte Wickelkopf- bzw. Außendurchmesser sowie -längen einzustellen. Die Enden der sogenannten Wickelköpfe sind relativ kompakt; oberhalb des Ständerpakets, d. h. in Bezug auf eine Drehachse eines Rotors jenseits der axialen Stirnflächen des Ständerpakets ergeben sich unterschiedlich große Durchlässe, die eine gewisse Durchströmung der Wickelköpfe ermöglichen. Bei Drei-Phasen-Systemen ist die Verformbarkeit des Wickelkopfes durch die gängigen verhältnismäßig großen Drahtdurchmesser stark eingegrenzt. Mit steigender Phasenzahl wird für eingezogene Wicklungen allerdings die Verwendung kleinerer Drahtdurchmesser bei der Nutauslegung zwingend.

Es ist vorgesehen, durch Verwendung von geprägten Wickelköpfen die Kühlung von mittels der Einziehtechnik gefertigten Ständern mit mehr als drei Phasen zu verbessern. Durch das Anheben der Windungsbögen (Wicklungsfortsätze) über dem Ständerpaket, d. h. durch das Verschieben der Wicklungsfortsätze, die im Wickelkopf vorhanden sind von den axialen Stirnenden des Ständerpakets bzw. des Ständereisens weg, vergrößert sich der Durchströmquerschnitt im durchlüfteten Bereich des Wickelkopfes. Ein durchgängig großer Radius am kompakten Wickelkopfende, d. h. an dessen axialen Ende, fördert eine gleichmäßige und besser wärmeabführende Umströmung oberhalb des Wickelkopfes. Beide Wickelkopfzonen, d. h. die Länge des Wickelkopfbereichs, der gut durchströmbar ist und die Länge des eigentlichen Wickelkopfes, d. h. des Bereichs, in dem die Wickeldrähte im Wesentlichen in Umfangsrichtung ausgerichtet sind, werden auf ein definiertes Verhältnis zueinander eingestellt.

Die kontrollierte Um- bzw. Durchströmung der Wickelköpfe der Ständer bei Kompaktgeneratoren mit innenliegenden Radiallüftern (eventuell mit Axialkomponente) trägt ganz entscheidend zu deren Kühlung und damit indirekt zur Leistung bzw. zum dafür notwendigen Materialeinsatz bei. Bei guter Auslegung kann das Kupfergewicht bzw. das Drahtgewicht der Wicklung verringert werden. Bei der Auslegung von Ständern mit mehr als drei Phasen werden kleinere Drahtdurchmesser verwendet bzw. benötigt, um eine Herstellung mit Einziehtechnik noch zu ermöglichen. Bei der Nutauslegung ist ein Kompromiss zwischen großer Nutschlitzbreite (wegen des Einziehvorgangs) und den Zahnkopfabmessungen (wegen der Befestigung der Nutverschlüsse) notwendig. Für die erfindungsgemäße Prägung der Wickelköpfe ist der Einsatz von Drähten mit einem Durchmesser von weniger als 1,5mm vorteilhaft. Es ist vorgesehen, dass die Wickelköpfe, welche mit Einziehtechnik hergestellt werden, einen Aufbau aus zwei Zonen zeigen: ein durchlüfteter Bereich unmittelbar axial an das Ständerpaket anschließend und ein kompakter umströmter Bereich am Wickelkopfende. Durch gezieltes Prägen der Wickelkopfkontur von allen Seiten (neben der Innen-, Außen- und Oberseite auch vom Ständerpaket her) wird die durchströmte Zone 1 (die Öffnungslänge, welche axial an das Ständerpaket anschließt) im Verhältnis zur Wickelkopflänge L auf 0,25 bis 0,4 eingestellt. Durch Anheben der Windungsbögen über dem Ständerpaket mit einem geeigneten Werkzeug wird der Durchströmungsquerschnitt im unteren Bereich des Wickelkopfes, d. h. zwischen den Drahtabschnitten, die in Umfangsrichtung orientiert sind und der axialen Stellfläche des Ständereisens vergrößert. Zusätzlich wird dadurch die Größe und Form der einzelnen Öffnungen gleichmäßiger. Die maximale Abweichung der axialen Länge I aller Durchströmöffnungen 105 von einem Durchschnittswert soll maximal 20% betragen. Durch den oben beschriebenen Anhebevorgang, d. h. durch das gezielte Verlagern der sich außerhalb der Nuten befindenden Drahtabschnitte, wird kein zusätzliches Kupfer benötigt, um die Kühlung zu verbessern. Vielmehr wird nur die für den Einziehvorgang notwendige Mindestmenge an Draht mit Blick auf die Kühlung besser verteilt.

Die Gefahr von Kurzschlüssen an den Kanten des Ständerpaketes wird verringert, weil die kritischen Drähte, nämlich die Drähte, die sich im Bereich der Kanten der Nuten befinden, die im Bereich des axialen Ständerendes liegen in einen anderen Winkel und dies bedeutet nahezu senkrecht zur axialen Stirnfläche des Ständereisens gestellt werden. Damit können sogar vom Einziehvorgang herrührende Kurzschlüsse durch eine nachfolgende Imprägnierung wieder isoliert werden. Dies bedeutet, dass eventuelle Beschädigungen von Drähten an den sich an der axialen Stirnfläche des Ständereisens befindlichen Kanten der Nuten durch das Aufrichten der Drähte wieder beseitigt werden, indem die Drähte von den eben angesprochenen Kanten entfernt werden. Nachfolgendes Isolieren bzw. Imprägnieren führt dann zum Wiederisolieren der Drähte.

Durch den einseitigen Einziehvorgang entstandene Symmetrieabweichungen zwischen den beiden an den axialen Enden des Ständereisens angeordneten Wickelköpfen (gemeinhin als an der Antriebs- d. h. Riemenscheibenseite bzw. Bürstenseite d. h. Reglerseite des Ständers befindlich bezeichnet) können wieder ausgeglichen werden, in dem durch die auf beiden Seiten des Ständers durchgeführten Anhebevorgänge eine symmetrische Anordnung entsteht. Die definierte Mittellage des Ständerpakets zu den Wickelköpfen reduziert die Toleranzeinflüsse im Zusammenbau insbesondere mit Blick auf den notwendigen Isolationsabstand zwischen Wickelköpfen und Lagerschild.

Durch das Werkzeug zum Anheben der Windungsbögen kann auch das Isolationspapier der Ständernuten aufgerichtet werden und Aufspreizungen des Isolationspapiers, ganz besonders im Bereich der Mündungen der Nuten, die vom Einziehvorgang herrühren, wieder flach an die einzelnen aus den Nuten tretenden Drahtbündel angelegt werden. Der Durchströmungsquerschnitt wird durch diesen Effekt zusätzlich vergrößert. Besonders vorteilhaft ist ein sogenanntes pulverbeschichtetes Ständerpaket, da dadurch maximale Durchströmquerschnitte erreicht werden können, da das Isolationspapier dann ganz entfällt. Zudem reduziert ein gleichmäßiger, durchgängig möglichst großer Radius am Wickelkopfende die frühzeitige Ablösung der Luftströmung oberhalb des Wickelkopfes und ermöglicht damit einen stabileren Wärmeübergang zwischen Wickelkopf und Luftstrom in einem größeren Bereich. Dabei ist ein Verhältnis von Radius R am Wickelkopf zu Wickelkopflänge L zwischen 0,15 und 0,35 vorteilhaft. Durch derartig definiert eingestellte Strömungsverläufe für die Kühlungsluft werden neben positiven Kühlungseffekten auch eine Reduktion der Strömungsgeräusche beobachtet. Insbesondere lassen gleichmäßige Öffnungen im durchlüfteten Bereich Verbesserungen beim Strömungsgeräusch der achten Ordnung zu.

### Kurze Beschreibung der Zeichnungen

Die Erfindung wird im Folgenden beispielhaft anhand der Figuren näher erläutert:
**Es zeigen:**
Figur 1 einen Querschnitt durch eine elektrische Maschine,
Figur 2 ausschnittweise den Ständer von radial außen,
Figur 3 ausschnittweise den Ständer von radial innen,
Figur 4a und 4b eine Durchtrittsöffnung in zwei Ansichten,
Figur 5 eine Ansicht einer Durchtrittsöffnung,
Figur 6 einen Querschnitt durch den Stator dargestellt
Figur 7 skizzenhaft ein Verfahren zum Formen der Durchtrittsöffnungen und der Wickelköpfe.

### Ausführungsformen der Erfindung

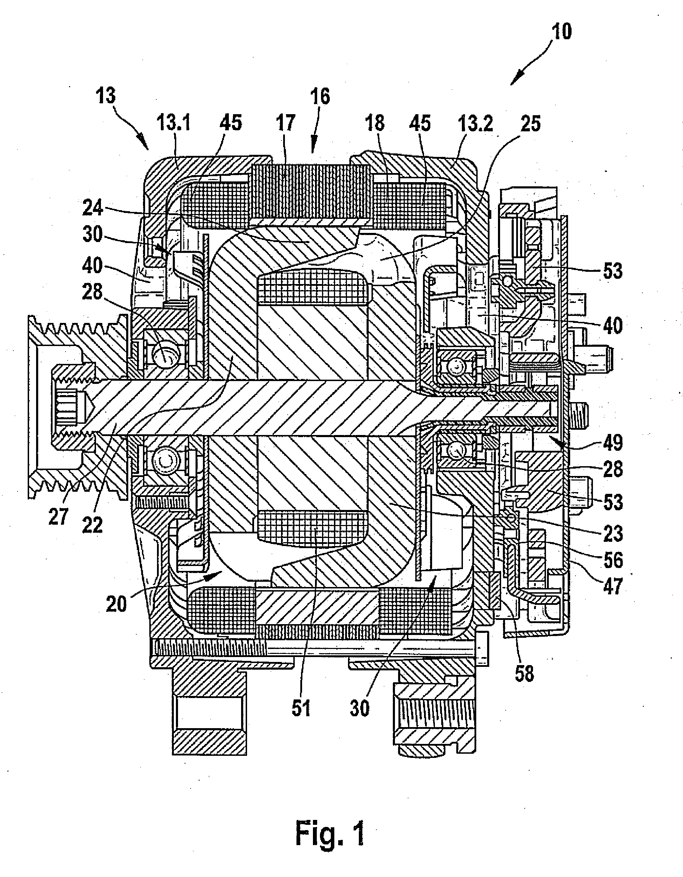

In Figur 1 ist ein Querschnitt durch eine elektrische Maschine 10, hier in der Ausführung als Generator bzw. Drehstromgenerator für Kraftfahrzeuge, dargestellt. Diese elektrische Maschine 10 weist u.a. ein zweiteiliges Gehäuse 13 auf, das aus einem ersten Lagerschild 13.1 und einem zweiten Lagerschild 13.2 besteht. Das Lagerschild 13.1 und das Lagerschild 13.2 nehmen in sich einen sogenannten Stator 16 auf, der einerseits aus einem im Wesentlichen kreisringförmigen Ständereisen 17 besteht, und in dessen nach radial innen gerichtete, sich axial erstreckende Nuten (Aufnahmen für Wicklungsabschnitte) eine Ständerwicklung 18 eingelegt ist. Dieser ringförmige Stator 16 umgibt mit seiner radial nach innen gerichteten genuteten Oberfläche einen Rotor 20, der als Klauenpolläufer ausgebildet ist. Der Rotor 20 besteht u.a. aus zwei Klauenpolplatinen 22 und 23, an deren Außenumfang jeweils sich in axialer Richtung erstreckende Klauenpolfinger 24 und 25 angeordnet sind. Beide Klauenpolplatinen 22 und 23 sind im Rotor 20 derart angeordnet, dass deren sich in axialer Richtung erstreckende Klauenpolfinger 24 bzw. 25 am Umfang des Rotors 20 einander abwechseln. Es ergeben sich dadurch magnetisch erforderliche Zwischenräume zwischen den gegensinnig magnetisierten Klauenpolfingern 24 und 25, die als Klauenpolzwischenräume bezeichnet werden. Der Rotor 20 ist mittels einer Welle 27 und je einem auf je einer Rotorseite befindlichen Wälzlager 28 in den jeweiligen Lagerschilden 13.1 bzw. 13.2 drehbar gelagert.

Der Rotor 20 weist insgesamt zwei axiale Stirnflächen auf, an denen jeweils ein Lüfter 30 befestigt ist. Dieser Lüfter 30 besteht im Wesentlichen aus einem plattenförmigen bzw. scheibenförmigen Abschnitt, von dem Lüfterschaufeln in bekannter Weise ausgehen. Diese Lüfter 30 dienen dazu, über Öffnungen 40 in den Lagerschilden 13.1 und 13.2 einen Luftaustausch zwischen der Außenseite der elektrischen Maschine 10 und dem Innenraum der elektrischen Maschine 10 zu ermöglichen. Dazu sind die Öffnungen 40 im Wesentlichen an den axialen Enden der Lagerschilde 13.1 und 13.2 vorgesehen, über die mittels der Lüfter 30 Kühlluft in den Innenraum der elektrischen Maschine 10 eingesaugt wird. Diese Kühlluft wird durch die Rotation der Lüfter 30 nach radial außen beschleunigt, so dass diese durch den kühlluftdurchlässigen Wicklungsüberhang 45 hindurchtreten kann. Durch diesen Effekt wird der Wicklungsüberhang 45 (Wickelkopf) gekühlt. Die Kühlluft nimmt nach dem Hindurchtreten durch den Wicklungsüberhang 45 bzw. nach dem Umströmen dieses Wicklungsüberhangs 45 einen Weg nach radial außen, durch hier in dieser Figur 1 nicht dargestellte Öffnungen.

In Figur 1 auf der rechten Seite befindet sich eine Schutzkappe 47, die verschiedene Bauteile vor Umgebungseinflüssen schützt. So deckt diese Schutzkappe 47 beispielsweise eine sogenannte Schleifringbaugruppe 49 ab, die dazu dient, eine Erregerwicklung 51 mit Erregerstrom zu versorgen. Um diese Schleifringbaugruppe 49 herum ist ein Kühlkörper 53 angeordnet, der hier als Pluskühlkörper wirkt. Als sogenannter Minuskühlkörper wirkt das Lagerschild 13.2. Zwischen dem Lagerschild 13.2 und dem Kühlkörper 53 ist eine Anschlussplatte 56 angeordnet, die dazu dient, im Lagerschild 13.2 angeordnete Minusdioden 58 und hier in dieser Darstellung nicht gezeigte Plusdioden im Kühlkörper 53 miteinander zu verbinden und somit eine an sich bekannte Brückenschaltung darzustellen.

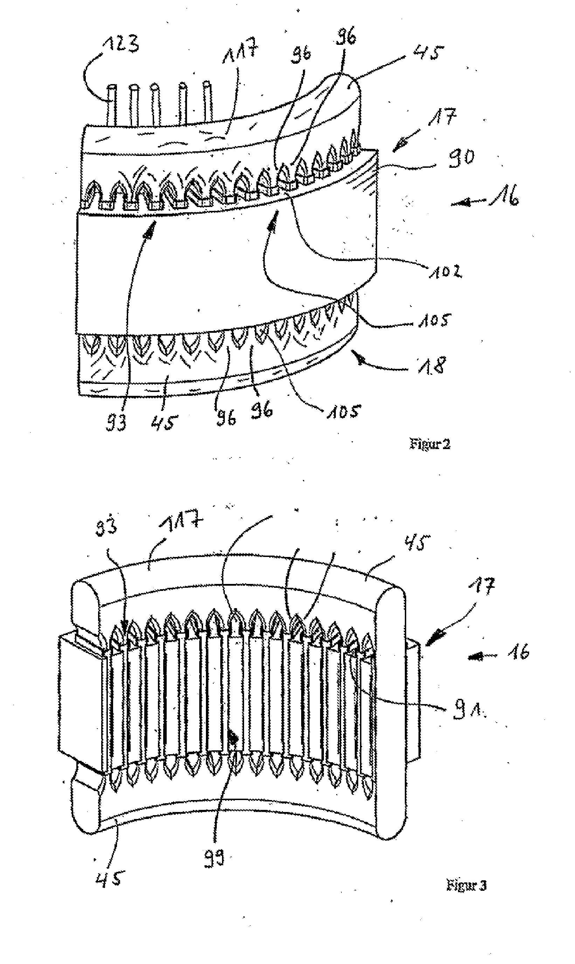

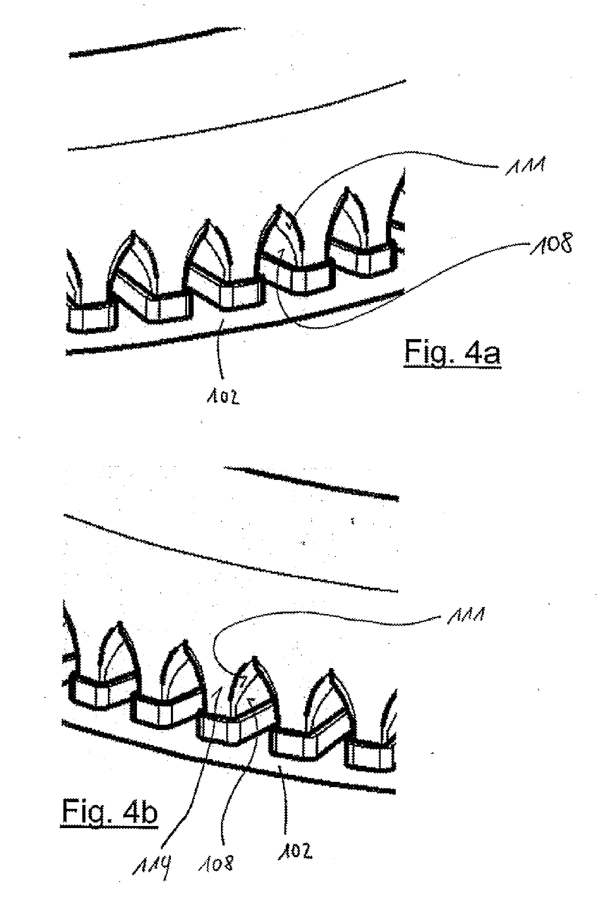

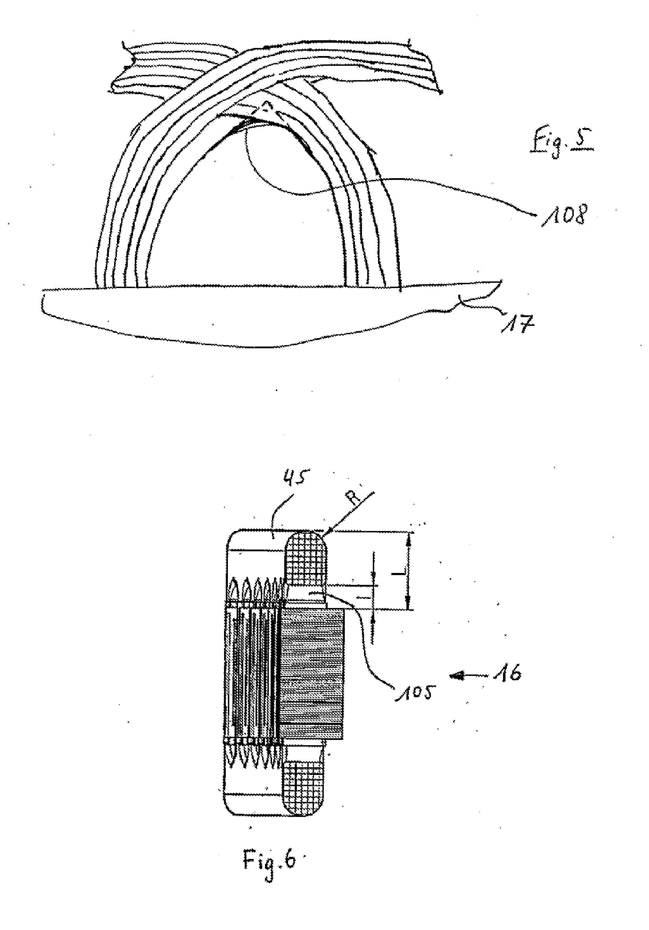

Figur 2 zeigt ausschnittweise den Ständer 16 aus dem Ständereisen 17, welches aus Lamellen 90 gebildet ist. Die Lamellen 90 weisen nach radial innen gerichtete Aufnahmen (Nuten) 93 für Wicklungsabschnitte auf. In den Aufnahmen 93 ist eine Ständerwicklung 18 eingelegt. Die Ständerwicklung weist beiderseits des Ständereisens 17 Wickelköpfe 45 auf. Diese Wickelköpfe 45 bestehen zumindest teilweise aus Wicklungsfortsätzen 96 der in den Aufnahmen 93 angeordneten Wicklungsabschnitte 99, siehe auch Figur 3. Dabei begrenzen Wicklungsfortsätze 96 aus einer bestimmten Aufnahme 93 und Wicklungsfortsätze 96 aus einer der genannten bestimmten Aufnahme 93 unmittelbar benachbarte Aufnahme 93 und ein Flächenabschnitt 102 eines axialen Endes des Ständerkerns 17, zwischen sich eine Durchströmöffnung 105. Es ist dabei vorgesehen, dass die zumindest eine Durchströmöffnung 105 zumindest eines Wickelkopfs 45 durch gezielt verformte Oberflächenabschnitte der Wicklungsfortsätze 96 begrenzt ist. Zu diesen gezielt verformten Oberflächenabschnitten gehören die Seitenflächen 108, die die Durchströmöffnungen seitlich begrenzen. Seitlich begrenzen bedeutet im Wesentlichen, dass diese Seitenflächen 108 den Hauptteil der Oberfläche der Durchströmöffnungen 105 bedecken, also den Abschnitt bzw. die Abschnitte, die sich auf der radialen Höhe der Zähne bzw. dem Hauptteil der Zähne, den Zahnflanken, befinden. Des Weiteren ergeben sich Übergänge 111, die sich zwischen den Seitenflächen 108 und den sich am Außenumfang befindenden nach radial außen gerichteten Außenflächen befinden, siehe Figur 4a und Figur 4b, in der die Oberflächenabschnitte einer einzigen Durchströmöffnung 105 in zwei verschiedenen Ansichten näher bezeichnet sind. Wie den Darstellungen in Figur 2, Figur 3, Figur 4a und Figur 4b entnommen werden kann, weisen die bzw. die zumindest eine Durchströmöffnung 105 eine Spitzbogenform auf. Diese Spitzbogenform, siehe auch Figur 5, schließt theoretisch an ihrem sich verjüngten Ende einen spitzen Winkel ein, der praktisch durch einen kleinen Bogen 108 ausgerundet ist.

Wie bereits erwähnt, weist die Durchströmöffnung 105 Übergänge 111 auf, die von einer Umfangsrichtung, d.h. von der Außenfläche 114 herkommend in eine radiale Richtung, d. h. in Richtung zur Seitenfläche 108 ausgerundet sind. Die Ausrundung weist vorzugsweise einen Radius zwischen 0,5 und 3mm auf. An dieser Stelle werden noch einige Hinweise zu den Wickelköpfen bzw. Wicklungsfortsätzen 96, sowie insbesondere der Darstellung in den Figuren 2, 3 und 4a, sowie 4b gegeben. Während die Darstellung in den genannten Figuren keine einzelnen Drähte zeigt, so sind doch einzelne Drähte diejenigen Gegenstände, die die einzelnen Abschnitte ausmachen. In den genannten Figuren ist die Oberflächenkultur der genannten Abschnitte nur durch ihre Hüllkurve dargestellt. Dies bedeutet, beispielsweise im Zusammenhang mit der Ausrundung des Übergangs 111, dass sich die an diesem Übergang 111 befindlichen Drähte an eine Hüllkurve bzw. -fläche des genannten Radiusbereichs anschmiegen.

Gemäß einer weiteren Ausgestaltung der Erfindung ist vorgesehen, dass die Durchströmöffnung 105 radial innen zwischen den radial innen angeordneten Übergängen 111 und den radial außen angeordneten Übergängen 111 auf der Innenseite einen kleineren Querschnitt als radial außen aufweist. Letzteres bedeutet, dass der radiale Querschnitt in Figur 2 (Innenseite) größer als in Figur 3 (Außenseite) ist. Mit anderen Worten, die Durchströmöffnung 105 weist einen sich von radial innen nach radial außen erweiternden Querschnitt (leichte Trichterform) auf.

So wie in den Figuren 2 und 3 für den Wickelkopf 45 angedeutet, weist der aus den Wicklungsfortsätzen 96 gebildete Wickelkopf 45 ebenfalls eine umgeformte Außenkontur 117 auf. Dies bedeutet, wie bereits zuvor erwähnt, dass diese sich in diesem Bereich befindenden Drahtabschnitte und hier vor allem natürlich die Drahtabschnitte, die im Bereich der Außenkontur 117 angeordnet sind, an eine Hüllkurve anschmiegen. Mit anderen Worten, alle sich im Bereich der Außenkontur 117 befindlichen Drähte bzw. Drahtabschnitte befinden sich über den Umfang des Ständers 16 betrachtet innerhalb einer dem Wickelkopf 45 aufgezwungenen Außenkontur. Es ist dabei vorgesehen, dass die Außenkontur 117 nach axial außen bogenförmig gestaltet ist (konvex). Es ist vorgesehen, dass die Außenkontur (Hüllfläche, Hüllkontur) zumindest abschnittsweise einen Radius R von 3 bis 10, vorzugsweise 9mm aufweist.

Wie in Figur 6 dargestellt, weist eine Durchströmöffnung 105 eine axiale Länge I auf, während ein Wickelkopf 45 eine axiale Länge L aufweist. Es ist vorgesehen, dass das Verhältnis einer axialen Länge I einer Durchströmöffnung 105 zu einer axialen Länge L des Wickelkopfes 45 zwischen 0,3 und 0,6 beträgt. Es ist des weiteren vorgesehen, dass die Abweichung der axialen Länge I aller Durchströmöffnungen 105 von einem Durchschnittswert maximal 20% beträgt. Gemäß einer weiteren Ausgestaltung der Erfindung ist vorgesehen, dass das Verhältnis zwischen dem Radius R und der Länge L des Wickelkopfs 45 zwischen 0,5 und 2 beträgt. Dies bedeutet beispielsweise, dass eine Länge L beispielsweise 20 mm lang ist und daher beispielsweise der Radius 10 mm betragen kann. Des Weiteren ist vorgesehen, dass das Verhältnis zwischen einer axialen Länge I einer Durchströmöffnung 105 und einer axialen Höhe h (siehe auch Figur 1) einer Lüfterschaufel 120 zwischen 0,25 und 0,65 beträgt. Die Ständerwicklung 18 ist vorzugsweise als Einziehwicklung gestaltet bzw. als Einziehwicklung in das Ständereisen 17 eingebracht. Die Ständerwicklung 18 weist vorzugsweise 5 oder 6 Stränge auf, gegebenenfalls auch 7. Es ist insgesamt vorgesehen, dass die Ständerwicklung 18 einen Wicklungsdraht 123 aufweist, dessen Durchmesser einen Wert von 1,5mm, vorzugsweise kleiner als 1,5mm aufweist.

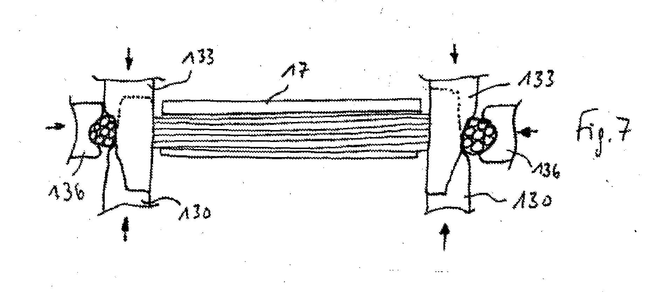

Gemäß einer weiteren Ausgestaltung der Erfindung ist vorgesehen, dass der Stator 16 in der sogenannten Flachpaket-Technik hergestellt ist. Bei diesem Verfahren werden einzelne streifenförmige Lamellen deckungsgleich aufeinander gestapelt. Es wird dadurch ein etwa quaderförmiges, im Wesentlichen flaches Ständereisen 17 gebildet, das auf einer Seite kammartig die elektromagnetisch wirksamen Nuten und Zähne aufweist, die für die Wechselwirkung mit einem Läufer bzw. Rotor vorgesehen sind. In dieses kammartige Ständereisen wird eine separat vorbereitete flache Wicklung eingesetzt. Diese Flachpaketwicklung lässt sich als einfache oder verteilte Schleifen- oder Wellenwicklung ausführen. Der Zusammenbau aus Ständereisen mit Wicklung wird anschließend in einer Vorrichtung zu einem kreisringförmigen Ständer 16 rundgebogen. Dabei werden gegebenenfalls vorhandene Wicklungsüberhänge bzw. Wickelköpfe 45, welche beim Einlegen der Wicklung in das Ständereisen zunächst nicht in Nuten angeordnet sind, in die entsprechende Nut eingefügt, siehe beispielsweise auch die internationale Patentanmeldung WO 01/54254 A1, Figur 9 in Verbindung mit Figur 7 und Figur 10. Die sich nach dem Rundbiegen gegenüberliegenden Stirnseiten des Ständereisens werden verbunden, beispielsweise durch einen Schweißvorgang.

Es ist vorgesehen, dass ein fünfphasiges System mit fünf Wicklungssträngen bzw. Wicklungsphasen verwendet wird. Die Wicklungsstränge werden dabei mit vorgeformten Spulenköpfen bzw. Wicklungsköpfen 45 in das Ständereisen 17 eingelegt. Die Spulenköpfe werden zu kompakten Wickelköpfen 45 geprägt.

In Figur 7 ist dargestellt, wie die Durchströmöffnungen 105 jeweils durch einen aus axialer Richtung zugestellten Formschieber 130 bzw. 133 und durch einen von radial außen wirkenden und zugestellten Formschieber 136 und damit die Oberflächenabschnitte der Durchströmöffnung 105 gezielt verformt werden. Zur Verformung bzw. Umformung der Wickelköpfe 45 und ganz besonders zur Anpassung der nach axial außen gerichteten Außenkontur (Radius R) ist ein entsprechender radialer Schieber 136 vorzusehen, der in der dargestellten Richtung auf den Wickelkopf 45 zugestellt wird. Darüber hinaus können weitere von radial innen und radial außen zuzustellende Schieber vorgesehen sein, um die nach radial außen oder radial innen gerichteten Abschnitte des Wickelkopfes 45 zusätzlich zu formen. Es ist somit vorgesehen, dass die elektrische Maschine 10 zumindest eine Durchströmöffnung 105 hat, die mittels zumindest eines Formwerkzeugs (130, 133, 136) bearbeitet wird, wobei dabei die Oberflächenabschnitte (Seitenflächen 108, Übergänge 111, Außenflächen 114 und radialen Innenflächen) der Wicklungsfortsätze 96 gezielt verformt werden, indem eine Presskraft zwischen den Oberflächenabschnitten der Wicklungsfortsätze und dem mindestens einen Formwerkzeug wirkt. Es ist vorgesehen, dass die Durchströmöffnung 105 im Bereich eines Übergangs von einer Umfangsrichtung in radialer Richtung, d. h. im Bereich des Bogens 109 ausgerundet wird. Es ist des weiteren vorgesehen, dass an beiden axialen Enden des Ständers 16 die Durchströmöffnungen 105 durch Oberflächenabschnitte (Seitenflächen 108, Übergang 111, Außenfläche 114 und radialen Innenfläche) der Wicklungsfortsätze 45 begrenzt und die Oberflächenabschnitte gleichzeitig gezielt verformt werden.

## Patentansprüche

1. Elektrische Maschine mit einem Ständer (16),
- der einen Ständerkern (17) und eine Ständerwicklung (18) aus Wicklungsdraht aufweist,
o wobei der Ständerkern (17) Aufnahmen (93) für Wicklungsabschnitte, vorzugsweise Nuten, aufweist und
o in den Aufnahmen (93) Wicklungsabschnitte angeordnet sind, und der Ständerkern (17) axiale Enden aufweist,
- wobei die Ständerwicklung (18) außerhalb der Aufnahmen (93) jeweils Wickelköpfe (45) hat,
o die zumindest teilweise aus Wicklungsfortsätzen (96) der in den Aufnahmen (93) angeordneten Wicklungsabschnitte (99) bestehen und
- Wicklungsfortsätze (96) aus einer bestimmten Aufnahme (93), Wicklungsfortsätze (96) aus einer der genannten bestimmten Aufnahme (93) unmittelbar benachbarten Aufnahme (93) und ein Flächenabschnitt eines axialen Endes des Ständerkerns (17) zwischen sich eine Durchströmöffnung (105) begrenzen,
- **dadurch gekennzeichnet, dass** die Durchströmöffnung (105) zumindest eines Wickelkopfes (45) durch gezielt verformte Oberflächenabschnitte (108, 111, 114) der Wicklungsfortsätze (96) begrenzt ist.

2. Elektrische Maschine nach einem der Anspruch 1, **dadurch gekennzeichnet, dass**, dass die zumindest eine Durchströmöffnung (105) eine zumindest angenäherte Spitzbogenform aufweist.

3. Elektrische Maschine nach Anspruch 2, **dadurch gekennzeichnet, dass** die Spitzbogenform theoretisch einen spitzen Winkel einschließt, der praktisch durch einen Bogen (109) ausgerundet ist.

4. Elektrische Maschine nach einem der vorstehenden Ansprüche, **dadurch gekennzeichnet, dass** die Durchströmöffnung (105) im Bereich eines Übergangs (111) von einer Umfangsrichtung in eine radiale Richtung ausgerundet ist, wobei die Ausrundung vorzugsweise einen Radius von 0,5 bis 3 mm aufweist.

5. Elektrische Maschine nach einem der vorstehenden Ansprüche, **dadurch gekennzeichnet, dass** die Durchströmöffnung (105) radial innen einen kleineren Querschnitt als radial außen aufweist.

6. Elektrische Maschine nach einem der vorstehenden Ansprüche, **dadurch gekennzeichnet, dass** der aus den Wicklungsfortsätzen (96) bestehende Wickelkopf (45) eine umgeformte Außenkontur aufweist.

7. Elektrische Maschine nach Anspruch 6, **dadurch gekennzeichnet, dass** die Außenkontur nach axial außen bogenförmig gestaltet ist.

8. Elektrische Maschine nach Anspruch 7, **dadurch gekennzeichnet, dass** die Außenkontur einen Radius (R) von 3 bis 10, vorzugsweise 9 mm aufweist.

9. Elektrische Maschine nach einem der vorstehenden Ansprüche, **dadurch gekennzeichnet, dass** das Verhältnis einer axialen Länge (I) einer Durchströmöffnung (105) zu einer axialen Länge (L) des Wickelkopfes zwischen 0,3 und 0,6 beträgt.

10. Elektrische Maschine nach einem der vorstehenden Ansprüche, **dadurch gekennzeichnet, dass** die Abweichung der axialen Länge (I) aller Durchströmöffnungen (105) von einem Durchschnittswert maximal 20% beträgt.

11. Elektrische Maschine nach einem der vorstehenden Ansprüche, **dadurch gekennzeichnet, dass** das Verhältnis zwischen dem Radius (R) und der Länge (L) des Wickelkopfes (45) zwischen 0,5 und 2 beträgt.

12. Elektrische Maschine nach einem der vorstehenden Ansprüche, dass das Verhältnis zwischen einer axialen Länge (I) einer Durchströmöffnung (105) und einer axialen Höhe (h) einer Lüfterschaufel (30) zwischen 0,25 und 0,65 beträgt.

13. Elektrische Maschine nach einem der vorstehenden Ansprüche, dass die Ständerwicklung (18) als Einziehwicklung ausgebildet ist.

14. Elektrische Maschine nach einem der vorstehenden Ansprüche, dass die Ständerwicklung (18) mehr als drei Stränge, vorzugsweise fünf oder sechs Stränge aufweist.

15. Elektrische Maschine nach einem der vorstehenden Ansprüche, dass die Ständerwicklung (18) einen Wicklungsdraht aufweist, dessen Durchmesser einen Wert von 1,5 mm, vorzugsweise kleiner als 1, 5mm aufweist

16. Elektrische Maschine nach einem der vorstehenden Ansprüche, **dadurch gekennzeichnet, dass** radial innerhalb eines Wickelkopfes (45) ein radial nach außen fördernder Lüfter (30) angeordnet ist.

17. Verfahren zur Herstellung einer elektrischen Maschine mit einem Ständer (16),
- wobei in den Ständerkern (17), eine Ständerwicklung (18) aus Wicklungsdraht eingefügt wird,
o wobei der Ständerkern (17) Aufnahmen (93) für Wicklungsabschnitte (99), vorzugsweise Nuten, aufweist und
o in den Aufnahmen (93) Wicklungsabschnitte (99) angeordnet werden, und der Ständerkern (17) axiale Enden aufweist,
- wobei die Ständerwicklung (18) außerhalb der Aufnahmen (93) jeweils Wickelköpfe (45) hat,
o die zumindest teilweise aus Wicklungsfortsätzen (96) der in den Aufnahmen (93) angeordneten Wicklungsabschnitte (99) bestehen und
- Wicklungsfortsätze (96) aus einer bestimmten Aufnahme, Wicklungsfortsätze aus einer der genannten bestimmten Aufnahme (93) unmittelbar benachbarten Aufnahme (93) und ein Flächenabschnitt eines axialen Endes des Ständerkerns (17) zwischen sich eine Durchströmöffnung (105) begrenzen,
- **dadurch gekennzeichnet, dass** die Durchströmöffnung (105) durch Oberflächenabschnitte der Wicklungsfortsätze (96) begrenzt und die Oberflächenabschnitte gezielt verformt werden.

18. Verfahren nach Anspruch 17, **dadurch gekennzeichnet, dass** die elektrische Maschine (10) zumindest eine Durchströmöffnung (105) hat, die mittels zumindest eines Formwerkzeugs (130, 133, 136) bearbeitet wird, wobei dabei die Oberflächenabschnitte der Wicklungsfortsätze (96) gezielt verformt werden, indem eine Presskraft zwischen den Oberflächenabschnitten der Wicklungsfortsätze (96) und dem zumindest einen Formwerkzeug (130, 133, 136) wirkt.

19. Verfahren nach Anspruch 18, **dadurch gekennzeichnet, dass** die Durchströmöffnung (105) im Bereich eines Übergangs (111) von einer Umfangsrichtung in eine radiale Richtung ausgerundet wird.

20. Verfahren nach Anspruch 18 oder 19, **dadurch gekennzeichnet, dass** beim Wirken der Presskraft gleichzeitig eine Druckkraft auf den Wickelkopf (105) wirkt und dabei der Wickelkopf umgeformt wird.

21. Verfahren nach einem der Ansprüche 17 bis 20, **dadurch gekennzeichnet, dass** an beiden axialen Enden des Ständers (16) die Durchströmöffnungen (105) durch Oberflächenabschnitte der Wicklungsfortsätze (96) begrenzt und die Oberflächenabschnitte gleichzeitig gezielt verformt werden.
